# EUROPÄISCHE PATENTSCHRIFT

(11) **EP 2 336 623 B1**
(45) Veröffentlichungstag und Bekanntmachung des Hinweises auf die Patenterteilung: **28.05.2014**
(21) Anmeldenummer: 10195202.6
(22) Anmeldetag: 15.12.2010
(51) Int. Cl.: F16L 13/14

(54) **Fitting für ein Rohr**
Fitting for a pipe
Raccord pour un tuyau

(30) Priorität: 16.12.2009 DE 202009016975 U
(43) Veröffentlichungstag der Anmeldung: 22.06.2011
(73) Patentinhaber: Uponor Innovation AB, 73061 Virsbo (SE)
(72) Erfinder: Dittmar, Rainer, 97532 Üchtelhausen/Weipoltshausen (DE); Savolainen, Mika, 15700 Lahti (FI); Altmann, Maik, Zeil Am Main (DE)
(74) Vertreter: Epping - Hermann - Fischer

(56) Entgegenhaltungen:
- EP-A1- 0 774 611
- WO-A1-98/05897

## Beschreibung

Die Erfindung betrifft ein Fitting für ein Rohr, insbesondere zum Verbinden zweier Rohre, bei dem es sich um Kunststoffrohre handeln kann.

Fittings für den Anschluss von Rohren, die aus einer Metall-Kunststoff-Kombination gebildet sind oder deren Wandungen Kunststoffmaterial aufweisen, sind in vielerlei Ausgestaltungen bekannt. Die Fittingkörper der bekannten Fittings sind hierbei oftmals aus Metall gefertigt, das wegen seiner Festigkeit bevorzugt wird. Ein Fitting aus Kunststoff wird dann bevorzugt, wenn eine hohe Korrosionsbeständigkeit erforderlich ist. Darüber hinaus ist bekannt, das Rohr auf den Fitting aufzuschieben und anschließend durch Verpressung einer Presshülse oder durch Aufbringen einer auf andere Art und Weise erzeugten Anpresskraft zu halten.

Zur Fertigung derartiger Fittings werden vorbereitete Metallrohrzylinder in mehreren Arbeitsschritten bearbeitet, um daraus einen Fitting mit zwei Anschlussabschnitten für jeweilige Rohre zu bilden. Zu diesem Zweck wird oftmals eine mehr oder minder große Materialmenge von dem vorbearbeiteten Rohrzylinder oder eine Stange abgedreht, um somit Vertiefungen und Rillen zu erzeugen.

Ein solcher Fitting ist beispielsweise aus der EP 1 930 640 A oder der DE 20 2005 016258 U1 bzw. der DE 10 2005 000720 A1 bekannt. Die Herstellung dieser Fittings erzeugt jedoch zum Teil einen hohen Materialverlust, da eine Menge Material entfernt bzw. abgedreht werden muss, da die Halbzeuge in standarisierten Querschnitten vorhanden sind, um das mittlere symmetrisch angeordnete Zwischenstück zu erhalten.

Aus der WO 98/05897 A1 ist eine nichtlösbare Rohrverbindung unter Verwendung eines Dichtelements, einer Presshülse und einer Stützhülse bekannt. Fertigungskosten in Form von Material und Lohn werden insbesondere dadurch eingespart, dass die Press- und Stützhülse wesentlich vereinfacht worden ist und wesentliche Aufgaben bezüglich des Zusammenpassens der an der Rohrverbindung beteiligten Elemente auf das Dichtelement übertragen wurden.

Aufgabe der Erfindung ist es, ein einfach zu montierendes Fitting anzugeben, bei dem einerseits der Materialverlust reduziert ist und andererseits die gesamte Funktionalität eines Fittings erhalten bleibt.

Diesem Bedürfnis wird durch den Gegenstand des unabhängigen Patentanspruchs 1 Rechnung getragen. Ausgestaltungen und Weiterbildungen der Erfindung ergeben sich aus den Unteransprüchen.

Zur Lösung des Problems wird ein Fitting insbesondere zum Verbinden zweier Rohre vorgeschlagen, das eine Stützhülse mit einem ersten Anschlussabschnitt an einem ersten Ende und einem zweiten Anschlussabschnitt an einem zweiten, gegenüberliegenden Ende aufweist. Wenigstens ein Anschlussabschnitt der Stützhülse ist derartig geformt, dass ein Rohrabschnitt eines Rohres, insbesondere ein Kunststoff oder Metall-Verbundrohr auf den Anschlussabschnitt aufsteckbar ist. Die Stützhülse weist weiterhin einen Mittelabschnitt auf, der im Wesentlichen symmetrisch oder asymmetrisch zwischen dem ersten und dem zweiten Anschlussabschnitt angeordnet sein kann. Dieser Mittelabschnitt umfasst ein zumindest teilweise um die Stützhülse herumlaufendes Fixierungselement zum Halten eines Ringelementes.

Weiterhin ist für das erfindungsgemäße Fitting ein trennbares Ringelement mit einem Innendurchmesser vorgesehen, der im Wesentlichen einem Außendurchmesser des Mittelabschnitts entspricht. Das trennbare Ringelement ist ausgebildet, entlang eines Endes der Stützhülse auf die Stützhülse geschoben und geflanscht sowie durch das Fixierungselement im Mittelabschnitt in einer Fixposition gehalten zu werden.

Dabei umfasst das Fixierungselement mehrere zum Teil gegenüberliegende oder zueinander versetzte und zumindest abschnittsweise im Mittelabschnitt um die Stützhülse herumlaufende Halterungen, zwischen denen das Ringelement einfügbar, insbesondere klemmbar ist, wobei wenigstens eine der Halterungen als erste Erhebung ausgeführt ist, deren äußere Oberfläche abflachend und in Richtung zur Mitte der Stützhülse ansteigend ausgebildet ist, so dass die Erhebung eine Art Dreieck mit einer steil abfallenden Seitenflanke bildet.

Mit der Erfindung werden somit ein Fitting sowie ein trennbares Ringelement bereitgestellt. Das Fitting, insbesondere ein Metallfitting, wird somit nicht mehr aus einem einzelnen Stück mit einem hervorragenden Mittelabschnitt gefertigt, sondern aus zwei getrennt gefertigten Elementen, nämlich einer Stützhülse sowie einem getrennten Ringelement, welches zur Fertigstellung des Fittings auf die Stützhülse geflanscht und in einer Fixposition gehalten wird.

Durch die vorgenommene Trennung wird der Materialverlust eines Metallfittings während der Fertigung deutlich reduziert, da zur Herstellung der Stützhülse ein dünnerwandiges Rohr oder eine dünnere Stange ausreichend ist und zur Bildung des mittleren herausragenden Abschnitts nicht mehr eine große Materialmenge von dem Rohr abgenommen werden muss. Vielmehr wird erfindungsgemäß ein Fixierungselement im Mittelabschnitt einer Stützhülse gefertigt, welches dazu dient, ein trennbares Ringelement im Mittelabschnitt in einer festen Position zu halten.

Sofern die Stützhülse aus einem Kunststoff oder einer Metall-Kunststoffverbindung gefertigt ist, vereinfacht sich die Herstellung, insbesondere ein Spritzgussverfahren, weil durch die Herstellung eines gleichmäßigeren Durchmessers während des Spritzgießens Spannungen im Kunststoff verringert werden. Die getrennte Herstellung von Kunststoffstützhülse und trennbaren Ringelement vermindert somit Spannungen in der Stützhülse, die bei einer Fertigung eines einzigen Werkstückes entstehen könnten.

Zur weiteren Materialeinsparung kann das Ringelement aus einem gegenüber dem Fitting unterschiedlichen Material gefertigt sein. Beispielsweise kann das Fitting aus Metall oder einer Metalllegierung oder einem Metall-Kunststoffverbindung oder Kunststoff bestehen, während das trennbare Ringelement aus einem Kunststoff oder Metall gebildet ist. Dennoch bleibt durch das Aufflanschen und die Befestigung des trennbaren Ringelements auf dem Mittelabschnitt der Stützhülse die Funktionalität dieser sich dann bildenden Erhebung bzw. des trennbaren Rings vollständig erhalten.

Neben einem Fitting zum Verbinden zweier Rohre, kann das Fitting an seinem ersten Anschlussabschnitt auch eine andere Verbindung umfassen, beispielsweise ein Gewinde, einen Schraubanschluss einen Adapter auf einen anderen Durchmesser oder ähnliches. Neben einer einfachen Stützhülse mit zwei gegenüberliegenden Öffnungen kann auch ein T-Stück oder eine Sternverbindung mit einem solchen trennbaren Ringelement ausgestattet werden.

In einer Ausgestaltung der Erfindung kann das trennbare Ringelement eine Farbcodierung aufweisen und sich beispielsweise farblich von dem Fitting unterscheiden. Auch lassen sich auf dem Ringelement weitere Information aufdrucken oder anderweitig aufbringen. Auf diese Weise lassen sich mittels der Farbe des trennbaren Ringelements einem Benutzer bzw. Installateur verschiedenartige Informationen mitteilen. Beispielsweise kann die Farbe anzeigen, ob das Fitting für eine Hin- bzw. Rücklaufleitung verwendet wird. Auch die Anzeige einer Kalt- bzw. Warmwasserleitung lässt sich über eine entsprechende Farbcodierung des trennbaren Ringelements erzeugen. Zusätzliche aufdruckbare Informationen sind auch der Zeitpunkt der Herstellung oder Installation des Fittings bzw. die durch das Fitting fließende Flüssigkeit.

Durch die Realisierung des Fittings aus einem Ringelement und einer hiervon getrennten Stützhülse ist diesbezüglich eine große Flexibilität erreichbar. Noch während der Installation, beispielsweise auf einer Baustelle, ist der Installateur in der Lage, ein geeignetes Ringelement auszuwählen, um die notwendigen Informationen über eine Farbcodierung, Schrift oder auch über eine geometrische Codierung, beispielsweise durch verschiedenartige geometrische Ausgestaltung des Rings, zu erzeugen. Durch die Fixierung des Ringelements im Mittelabschnitt wird einem Benutzer bzw. einem Installateur gleichzeitig eine Symmetrieinformation übermittelt, die beispielsweise während der Installation und des Anbringens der verschiedenen Rohrabschnitte auf der Stützhülse von Vorteil sein mag. Falls erforderlich, kann das trennbare Ringelement auch wieder abgenommen werden.

In einer Ausgestaltung der Erfindung umfasst das Fixierungselement auf der Stützhülse eine Klammer. Die Klammer ist durch zwei einander gegenüberliegende Erhebungen mit einer dazwischen liegenden Tasche ausgestaltet. Das trennbare Ringelement wird über eine der Erhebungen in den dazwischen liegende Abschnitt geführt und auf diese Weise im Mittelabschnitt der Stützhülse befestigt. Dieser Abschnitt kann einen Außendurchmesser aufweisen, der gleich oder leicht größer ist als der Außendurchmesser der Stützhülse in den Anschlussabschnitten, so dass das Ringelement ohne größere Schwierigkeiten befestigt werden kann.

Die Halterungen können abschnittsweise die Stützhülse umlaufen oder alternativ vollständig umfänglich um die Stützhülse angeordnet sein. In einer Ausgestaltung der Erfindung sind die die Klammer bildenden Erhebungen symmetrisch hinsichtlich ihrer Höhe und Ausgestaltung. In einer anderen Ausbildungsform sind sie asymmetrisch. Beispielsweise ist eine der Halterungen etwas kleiner oder flacher, wodurch einem Installateur die Aufsteckrichtung des trennbaren Ringelements angezeigt wird. Das trennbare Ringelement kann auf diese Weise an einem Ende der Stützhülse, die benachbart zu der niedrigeren Hülse liegt, besonders einfach aufgeschoben werden. Alternativ, können die beidseitig angeordneten als Klammer wirkenden Elemente auch verschieden ausgeführt sein. Beispielsweise kann ein Element um die Stützhülse herumlaufen, während das zweite abschnittsweise um die Hülse verläuft.

In einer weiteren Ausgestaltung sind in den Anschlussabschnitten zusätzliche Vertiefungen für die Aufnahme von Gummiringen ausgeführt. Die Gummiringe können vor dem Aufschieben des trennbaren Ringelements bereits in den Vertiefungen angeordnet sein. Das trennbare Ringelement kann in Form eines durchlaufenden Rings ausgestaltet sein, aber auch beidseitig zusätzliche Elemente umfassen. Sein Querschnitt kann rechtecksförmig, quadratisch, oder polyederförmig sein, aber auch andere Formen aufweisen. Beispielsweise kann es in Form eines "I" ausgeführt sein, sodass es in einem mittleren Bereich leichte Vertiefungen aufweist.

In einer weiteren Ausführung weist das trennbare Ringelement zusammensteckbare Ringsegmente auf. So kann das Ringsegment an einem Ende einen Halteclip mit einem Vorsprung umfassen, der ein einen Halteclip mit einer Vertiefung eines weiteren Ringsegmentes eingreift. In einer weiteren Ausgestaltung umfasst das trennbare Ringelement einen geschlitzten Ring, dessen Öffnungswinkel größer als 0° und kleiner als 180° ist. Der geschlitzte Ring kann eine Sollknickstelle aufweisen, so dass der geschlitzte Ring mittels an dem Schlitz angebrachten Clipelementen zum Zusammenstecken einen geschlossenen Ring bildet.

In einer Ausgestaltung ist das Fitting als Press- bzw. Klemmfitting mit zusätzlichen Press- bzw. Klemmhülsen ausgeführt. In dieser Ausgestaltung ist vorgesehen, dass die jeweiligen Presshülsen bzw. Klemmhülsen das trennbare Ringelement selbst nicht berühren und an diesem anliegen. Vielmehr ist zwischen der Klemm- bzw. Presshülse und dem trennbaren Ringelement ein Abstand vorgesehen, der auch nach einer Verpressung bzw. Klemmung weiter vorhanden ist.

Zur Positionierung und Anbringung einer Klemm- bzw. Presshülse ist in einer Ausgestaltung zwischen den Anschlussabschnitten an den Enden der Stützhülse und dem Mittelabschnitt der Stützhülse mindestens eine zusätzliche Vertiefung angeordnet. In diese greift eine Nase der jeweiligen Press- bzw. Klemmhülse und wird dort gehalten, ohne das Ringelement zu berühren.

In diesem Zusammenhang kann zusätzlich vorgesehen sein, dass das trennbare Ringelement in seinem Außenbereich, also dem von der Stützhülse entfernt liegenden Bereich, eine Verbreiterung aufweist. Diese kann beispielsweise oberhalb von Press- bzw. Klemmhülsen angeordnet sein, sodass die Verbreiterung die Klemm- bzw. Presshülse zum Teil überdeckt. Dadurch wird die Klemm- bzw. Presshülse vor Verunreinigungen oder Beschädigungen auch nach einem Verpressen geschützt.

In einer anderen Ausgestaltung der Erfindung bilden die Press- bzw. Klemmhülsen Teil des trennbaren Ringelements darstellen. In diesem Fall werden sie gemeinsam mit dem trennbaren Ringelement während der Fertigung des Fittings auf die Stützhülse schoben und im Mittelabschnitt in der Fixposition gehalten. Mit dem Ringelement ist die Klemm- oder die Presshülse mit dem Ringelement beispielsweise über Stege verbunden. Diese können während der Verpressung unterbrochen werden, so dass nach dem Verpressen keine Verbindung mehr zwischen Ring und verpresster Hülse vorhanden ist.

Im Weiteren wird die Erfindung anhand verschiedener Ausführungsformen unter Bezugnahme auf die Zeichnungen im Detail erläutert. Es zeigen:
- Figur 1: ein erstes Ausführungsbeispiel eines erfindungsgemäßen Fittings ohne aufgestecktes Ringelement,
- Figur 2: eine Ausführungsform eines erfindungsgemäßen Fittings mit Stützhülse und aufgeschobenem trennbaren Ringelement,
- Figur 3: eine Querschnittsdarstellung eines erfindungsgemäßen Fittings,
- Figur 4: eine Querschnittsdarstellung einer nicht erfindungsgemäßen Ausführungsform eines Fittings mit aufgestecktem Ringelement,
- Figur 5: eine weitere Ausführungsform eines erfindungsgemäßen Fittings in Querschnittsdarstellung,
- Figur 6: eine Querschnittsdarstellung einer weiteren Ausführung eines erfindungsgemäßen Fittings,
- Figur 7: eine Darstellung eines zusammensteckbaren Halbringes als Ringelement für einen Fitting nach einer Ausführungsform,
- Figur 8: eine Darstellung eines Ringelement aus zwei zusammensteckbaren Halbringen für einen Fitting nach einer Ausführungsform,
- Figur 9: eine Ausführungsform eines erfindungsgemäßen Fittings mit Stützhülse und aufgeschobenem geschlitzten trennbaren Ringelement.

Die folgenden verschiedenen Ausführungen betreffen ein Fitting zum Verbinden zweier Rohrelemente, beispielsweise von Kunststoff- bzw. Kunststoffmetallverbundrohren. Die Fittings selbst können aus Metall, Kunststoff oder einer Kombination aus Metall und Kunststoff gefertigt sein, beispielsweise ein Metall-Kunststoff-Verbundrohr. Die in den Darstellungsformen gezeigten Aspekte lassen sich für die verschiedenen Ausführungsformen beliebig miteinander kombinieren, ohne dass dies dem Grundgedanken der Erfindung, einen Fitting mit einer Stützhülse und einem davon trennbaren Ringelement vorzusehen, abträglich ist. In einigen Ausführungsformen ist ein Fitting mit einer Presshülse dargestellt. Jedoch ist das grundlegende Prinzip nicht auf Presshülsen beschränkt, sondern kann für jegliche Art von Fittings eingesetzt werden, darunter auch Fittings, die geeignet für Presshülsen, Klemmhülsen oder für andere Befestigungselemente sind, mit denen Rohre an der Stützhülse gehalten werden.

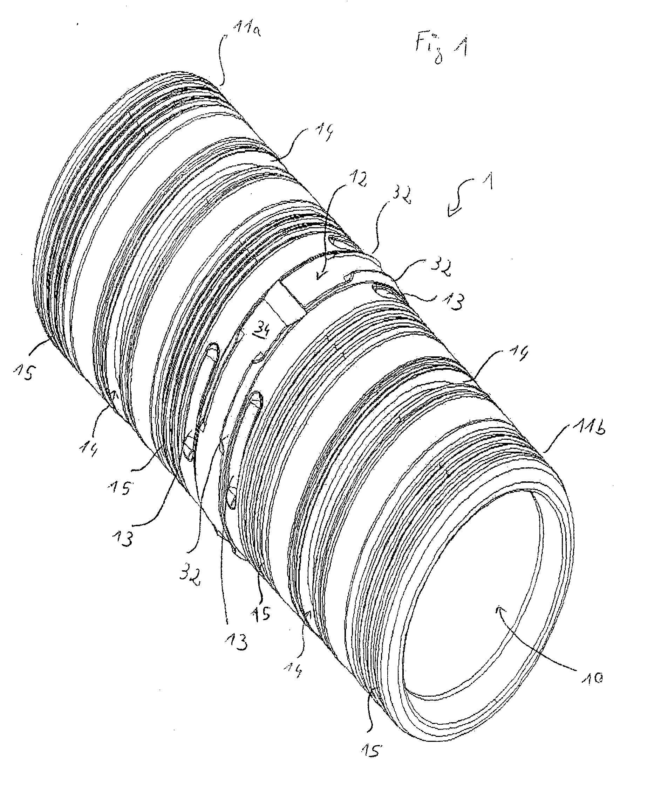

Figur 1 zeigt eine Stützhülse eines erfindungsgemäßen Fittings, die aus Metall, beispielsweise aus Kupfer, Messing oder einer Legierung besteht. Natürlich ist auch eine Kunststoff-Stützhülse denkbar. Zur Fertigung der gezeigten Stützhülse wird ein Rohr bearbeitet, indem verschiedene Rillen und Vertiefungen in das Rohr gefräst, gedreht oder anderweitig eingebracht werden. Im Gegensatz zu bisherigen Fittings ist bei dem erfindungsgemäßen Fitting mit der gezeigten Stützhülse jedoch kein oder ein nur sehr gering hervorstehender Mittelabschnitt vorgesehen, sodass zur Fertigung der gezeigten Stützhülse ein gegenüber herkömmlichen Fittings im Querschnitt reduziertes Halbzeug verwendbar ist. Entsprechend wird zur Herstellung der gezeigten Stützhülse auch deutlich weniger Material entfernt, sodass der Materialverbrauch insgesamt geringer ist. Neben einem Rohr kann auch ein handelsübliches Halbzeug, beispielsweise eine Stange mit Zylinder oder einen polygonen Querschnitt verwendet werden.

Die Stützhülse 1 umfasst einen ersten Abschnitt 11a sowie einen zweiten Abschnitt 11b, der endseitig leicht abgerundet ist. Beide Abschnitte 11a und 11b sind in dieser Darstellungsform symmetrisch aufgebaut. Durch die Öffnung 10 wiederum kann eine Flüssigkeit bzw. ein Gas durch die Stützhülse hindurch treten.

Die Endabschnitte 11a und 11b sind durch einen Mittelabschnitt 12 miteinander verbunden. Der Mittelabschnitt ist symmetrisch und mittig bezüglich der Stützhülse 1 angeordnet. Die Abschnitt 11a und 11b umfassen benachbart zu ihren jeweiligen Enden insgesamt drei gleichförmig umlaufende Rillen bzw. Vertiefungen 15, die leicht sägezahnförmig ausgeführt sind. In anderen Durchmessern von Fittings können eine andere Anzahl von Rillen abhängig vom Durchmesser eingedreht oder gefräst werden, zumindest jedoch eine Rille. Davon beabstandet ist eine weitere Vertiefung 14 vorgesehen, deren Tiefe deutlich tiefer ist als die der umlaufenden Rillen 15. Die Vertiefung 14 dient beispielsweise zur Aufnahme eines Gummiringes, mit dem die Dichtigkeit nach dem Aufstecken eines Kunststoff- bzw. Kunststoff-Metall-Verbundrohres auf dem Fitting gewährleistet ist. In Richtung auf den Mittelabschnitt 12 benachbart hierzu ist eine weitere leichte Vertiefung, in die ebenfalls ein Kunststoffring eingebracht werden kann. Anschließend sind in beiden Abschnitten 11a und 11b weitere umlaufende Rillen 15 angeordnet. Die Rillen 15 in den Abschnitten sind weniger tief als die Vertiefung 14 und dienen beispielsweise als Aufnahme von Material des Rohres, welches sich nach dem Aufstecken und anschließendem Verpressen in die Rillen 15 einlagert und damit zu einer zusätzlichen Festigkeit und Dichtigkeit der Press- bzw. Klemmverbindung beiträgt. Der sägezahnförmige Verlauf der Rillen 15 verhindert ein leichtes Abgleiten der auf die Stützhülse geschobenen Rohre.

Direkt benachbart zum Mittelabschnitt 12 sind weitere periodisch vertiefte Teilabschnitte 13 angeordnet. Diese sind nicht umlaufend, sondern in regelmäßigen Abschnitten benachbart zum Mittelabschnitt 12 als grabenförmige Vertiefung ausgebildet. Sie dienen zur Aufnahme einer Halterung einer Press- bzw. Klemmhülse, die hier nicht dargestellt auf das Pressfitting aufgesteckt wird. Zwischen der Press- bzw. Klemmhülse wird anschließend das zu verbindende Rohr eingeschoben und eine Verpressung vorgenommen.

Der Mittelabschnitt 12 umfasst wiederum eine leichte Erhöhung 34 sowie mehrere Teilabschnitte, die als Klammern mit jeweils zwei benachbart liegenden Halteelementen 32 als Erhebungen ausgebildet sind. Die Erhebungen 32 stellen ein Fixierungselement in Form einer Klammer dar, zwischen das das spätere anzuordnende trennbare Ringelement fixiert wird. Der Bereich 34, bei dem die Klammer mit den Elementen 32 angeordnet sind ist ebenfalls leicht erhöht, hat also einen leicht größeren Durchmesser als beispielsweise der Außendurchmesser der weiteren Abschnitte 11a und 11b. Zwischen den Abschnitten 34 ist der Mittelabschnitt leicht abgesenkt.

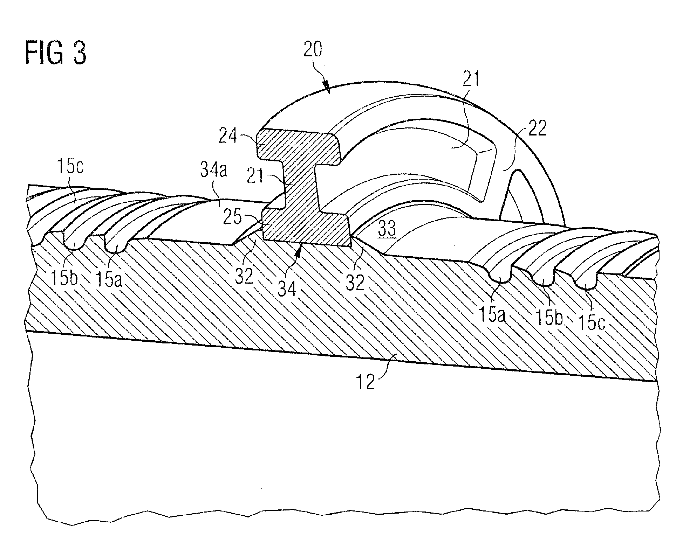

Figur 3 zeigt diesbezüglich eine detaillierte Querschnittsdarstellung des erfindungsgemäßen Fittings mit dem Mittelabschnitt 12 einer Stützhülse 1 und einem aufgesteckten trennbaren Ringelement. Der Mittelabschnitt 12 umfasst die beiden als Klammern ausgeführte Erhebungen 32, deren äußere Oberfläche abflachend und in Richtung zur Mitte der Stützhülse 12 ansteigend ausgebildet ist. Damit bilden die beiden Erhebungen 32 eine Art Dreieck mit einer steil abfallenden Seitenflanke, zwischen denen in der Fläche 34 das trennbare Ringelement 20 angeordnet ist. Die zwischen den als Klammer wirkenden Erhebungen 32 angeordnete Fläche 34 ist in dieser Ausgestaltung leicht oberhalb der äußeren Oberfläche 34e der Stützhülse angeordnet. Mit anderen Worten ist im Bereich 34a der Stützhülse der Außendurchmesser geringfügig kleiner als im Bereich 34 des Mittelabschnitts 12. Dadurch kann das Ringelement leicht über die äußeren Abschnitte 11a und 11b auf die Stützhülse geschoben werden.

Das trennbare Ringelement selbst zeigt die Form eines I mit einem unteren Haltebereich 25, dessen Breite im Wesentlichen dem Abstand der beiden eine Klammer bildende Erhebungen 32 ist. Dem Haltebereich 25 benachbart ist ein Mittelabschnitt 21 mit einem deutlich geringeren Querschnitt an den sich ein oberer Bereich 24 anschließt. Dieser entspricht im Wesentlichen der Breite des Haltebereichs 25 und ist zudem durch Verstrebungen 22 mit diesem verbunden. Auf der oberen äußeren Fläche des Bereichs 24 sind Buchstaben aufgedruckt, um einem Benutzer bzw. Installateur Informationen mitzuteilen. Die Vertiefung, die sich durch den Mittelabschnitt 21 ergibt, dient dazu, wenigstens teilweise eine Press- bzw. Klemmhülse aufzunehmen. Dennoch berührt die Klemm- bzw. Presshülse den trennbaren Ring nicht, sondern es bleibt zwischen diesem und der Press- bzw. Klemmhülse ein geringfügiger Abstand. Dieser Abstand kann beispielsweise die Breite der Erhebung 32 betragen.

In dieser Ausgestaltungsform sind das trennbare Ringelement 20 und die Stützhülse 1 aus unterschiedlichen Materialien gefertigt. Das trennbare Ringelement besteht aus einem Kunststoff und ist bezüglich der aus Metall gefertigten Stützhülse leichter kompressierbar, so dass er über eine der Erhebungen 32 im Mittelabschnitt 12 geschoben und im Bereich 34 in einer Fixposition gehalten wird.

Die weiteren rillenförmigen Vertiefungen 15a, 15b und 15c auf jeder Seite des Mittelabschnitts 12 sind im Wesentlichen halbkreisförmig ausgeführt. An dem jeweils zum Mittelabschnitt hin zeigenden Ende ist die Oberfläche leicht schräg abgeflacht. Damit wird eine Art Sägezahnhalterung gebildet, sodass ein Rohr einfach auf die Stützhülse aufgesteckt werden kann, gleichzeitig aber ein Zurückziehen des Rohres erschwert wird.

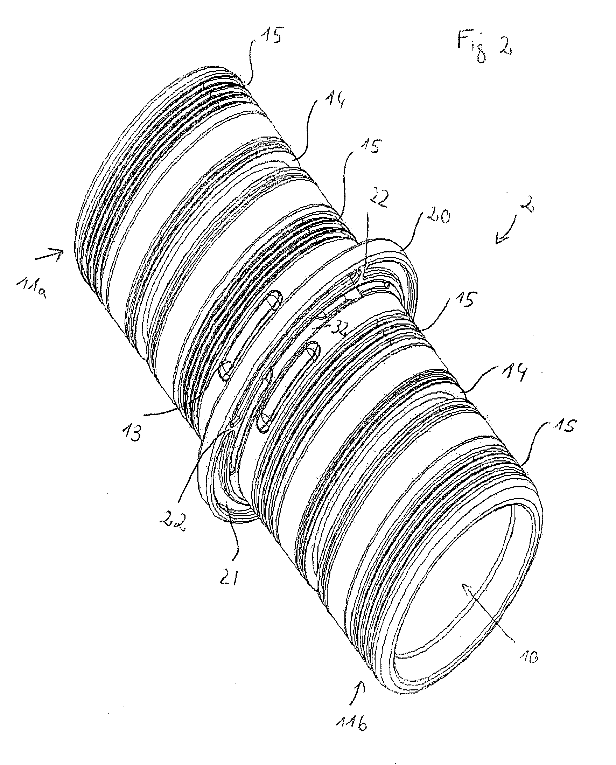

Figur 2 zeigt die Ausgestaltungsform eines erfindungsgemäßen Fittings 2 mit einem aufgesteckten trennbaren Ringelement. Die gleichen Merkmale bezüglich der Ausgestaltung der Stützhülse in Figur 1 tragen die gleichen Bezugszeichen.

Durch die beidseitig des Mittelabschnitts 12 angeordneten, als Klammer wirkenden Erhebungen 32 wird der Ring 20 im Mittelabschnitt in seiner Position fixiert. Zwischen den Abschnitten 34 mit den Haltelementen 32 ist der Mittelabschnitt 12 leicht abgesenkt. Somit liegt die Innenseite des Ringelements nur in den Bereichen 34 auf der Stützhülse auf, zwischen den Halteelementen ist er zum Teil freiliegend. Dies erleichtert die Installation des Ringelements während der Fertigung des Fittings. Natürlich ist es aber auch möglich, dass die Innenseite des Ringelements entlang seinem gesamten Umfang mit dem Mittelabschnitt der Stützhülse in Kontakt ist.

Die Vertiefungen 13 neben dem Mittelabschnitt 12 sind bezüglich der als Klammer wirkenden Erhebungen 32 leicht versetzt angeordnet. Je nach Ausgestaltungsform können die Vertiefungen 13 auch auf Lücke zu den Erhebungen 32 vorgesehen sein. Alternativ kann die Vertiefung 13 für die Halterung der Presshülse oder auch zumindest eine der als Klammer wirkenden Erhebungen 32 umlaufend um die Stützhülse ausgeführt sein.

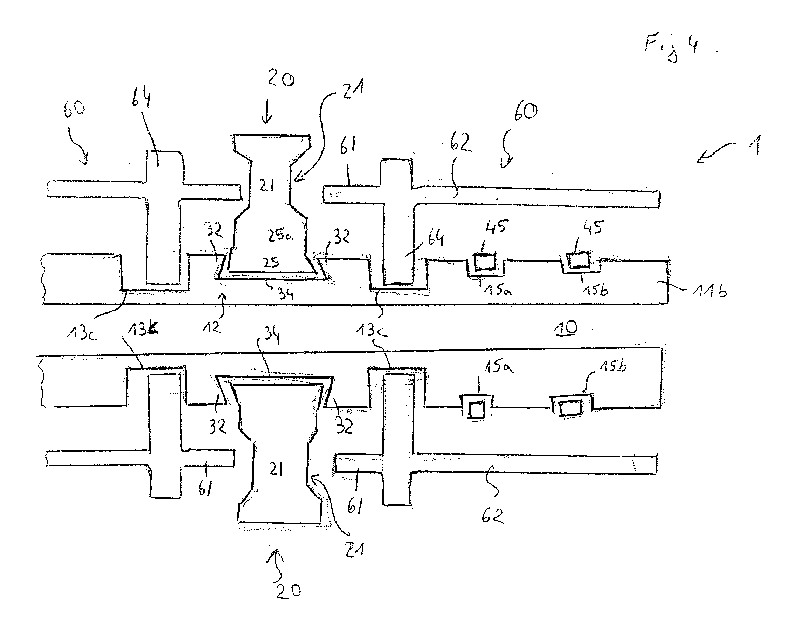

Figur 4 zeigt eine Ausführungsform eines nicht erfindungsgemäßen Fittings in Querschnittsdarstellung. Das erfindungsgemäße Fitting umfasst eine Stützhülse 1 mit zwei äußeren Anschlussabschnitten, von denen einer 11b hier ausführlich dargestellt ist. Der Anschlussabschnitt 11b ist für eine Klemmhülse ausgebildet und enthält benachbart zu einem Mittelabschnitt 12 eine um die Stützhülse herum verlaufende Vertiefung 13c. Der äußeren Öffnung des Anschlussabschnitts 11b zugewandt sind zwei zusätzliche Vertiefungen 15a und 15b vorgesehen, in denen jeweils eine Gummidichtung 45 umlaufend angeordnet ist. Diese Gummidichtung ist vorliegend im Wesentlichen rechtecksförmig ausgebildet, kann aber auch oval bzw. rund ausgeführt sein. Die Vertiefungen 15a und 15b sind entsprechend als rechtecksförmige Vertiefungen ausgeführt, jedoch flacher als die für die Presshülse 60 vorgesehene Vertiefung 13c. Die Presshülse 60 umfasst einen Pressabschnitt 62, der zwischen dem äußeren Ende des Anschlussabschnitts 11b der Stützhülse und der Vertiefung 13c zur Halterung der Presshülse angeordnet ist. Er überdeckt somit die beiden für die Gummiringe 45 vorgesehenen Vertiefungen 15a und 15b. In den so gebildeten Zwischenraum kann ein Rohr bis zum Halteabschnitt 64 der Presshülse 60 eingeschoben werden.

Der Halteabschnitt 64 ist in dieser Ausgestaltung leicht schmäler ausgebildet als die Breite der Vertiefung 13c zur Halterung der Presshülse 60. Dadurch hat die Presshülse ein leichtes Spiel. Zur Stabilisierung der Presshülse ist ein über den Halteabschnitt 64 leicht herausragender Bereich 61 vorgesehen. Dieser ist jedoch so kurz, dass er selbst bei einer Positionierung der Presshülse 60 am linken Rand der Vertiefung 13c das umlaufende trennbare Ringelement 20 mit seiner Vertiefung 21 nicht berührt. Mit anderen Worten ist zwischen dem umlaufenden trennbaren Ringelement 20 und der Presshülse 60 weiterhin ein Abstand vorhanden. Die etwas breitere Vertiefung 13c als der Halteabschnitt 64 ermöglicht eine einfache Installation der Presshülse 60 und dient dazu, Fertigungstoleranzen zwischen dem Halteabschnitt 64 der Presshülse 60 und der Stützhülse 11b auszugleichen.

Der Mittelabschnitt 12 umfasst ebenfalls eine Vertiefung 34, die beginnend von der äußeren Oberfläche der Stützhülse hin zum inneren Bereich einen leicht sich aufweitenden Querschnitt aufweist. Berandet ist die Vertiefung 34 durch zwei leicht abgeschrägte Randelemente 32, deren Radius leicht mit der Tiefe zunimmt. Sie sind somit trichterförmig nach innen hin geöffnet. Die Tiefe der Vertiefung im Mittelabschnitt 12 ist in dieser Ausgestaltung geringer gewählt als die entsprechende Vertiefung 13c für die Halteelemente der Presshülse 60. Gleichzeitig ist das Ringelement 20 mit seinem unteren Bereich breiter ausgeführt, sodass es während der Installation und dem Zusammenbau des Fittings über die Vertiefungen 13c geschoben und anschließend mittels seiner ebenfalls leicht abgeschrägten Bereiche im Halteabschnitt 25 in die Vertiefung 34 geklemmt und fixiert werden kann.

Das trennbare Ringelement weist zudem einen Abschnitt 25a auf, der sich nach oben hin im Bereich 21 verjüngt und in die trichterförmige Vertiefung in der Stützhülse eingesteckt wird. Der Bereich 25a ist in einem Abstand zur Stützhülse angeordnet, in dem auch die überstehenden Abschnitte 61 der Presshülsen 60 angeordnet sind. Der obere Bereich des trennbaren Ringes 20 ist wiederum breiter ausgestaltet und erlaubt es, an seiner Oberfläche Schriftzüge zur Information an einen Installateur anzubringen. Darüber hinaus kann er als leichte Abdeckung für die überstehenden Abschnitte 61 der Presshülse nach einer Verpressung und Fertigstellung des Fittings dienen, sodass ein zusätzlicher Staub- bzw. Verschmutzungsschutz im Bereich zwischen dem trennbaren Ringelement und dem Halteelement 64 der Presshülse 60 erreicht wird. Der trennbare Ringabschnitt kann zur einfachen Befestigung innerhalb der Vertiefung 34 aus Kunststoff gebildet sein, sodass er sich wie ein Clip in die Vertiefung 34 und die abgeschrägten Flächen 32 einrasten lässt.

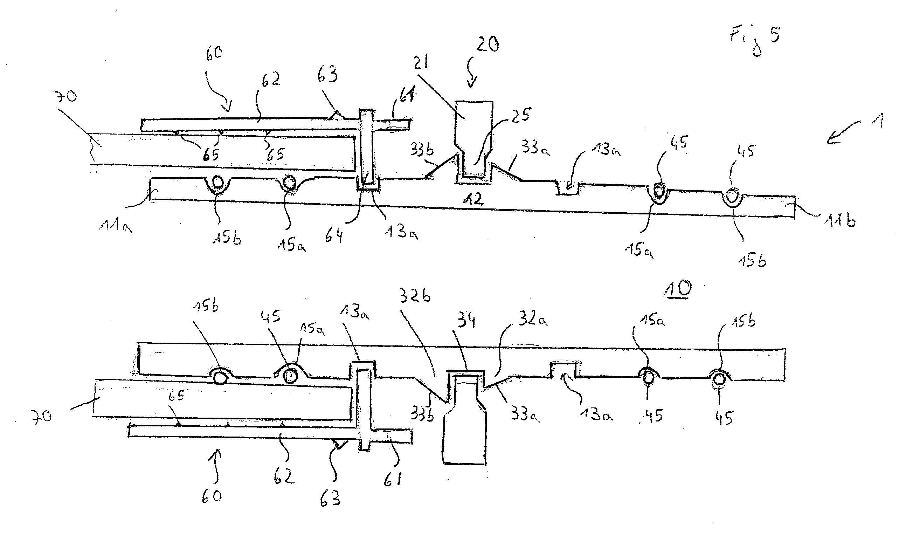

Figur 5 zeigt eine weitere Ausgestaltungsform eines erfindungsgemäßen Fittings. Bei diesem ist eine Stützhülse mit den beiden Anschlussabschnitten 11a und 11b und einem Mittelabschnitt 12 vorgesehen. Die beiden Anschlussabschnitte umfassen wiederum die umlaufenden Vertiefungen 15a und 15b zur Aufnahme von Gummidichtungen 45. Zwischen den umlaufenden Vertiefungen 15a auf beiden Seiten des Mittelabschnitts 12 und dem Mittelabschnitt 12 ist eine weitere Vertiefung 13a zur Aufnahme des Halteelements 64 einer Presshülse 60 vorgesehen. Wie dargestellt, ist in dieser Ausgestaltung die linke Presshülse oberhalb des Anschlussabschnitts 11a bereits an das Fitting angefügt und der Halteabschnitt 64 greift in die Vertiefung 13a. Im Zwischenraum zwischen dem Pressabschnitt 62 und im Anschlussabschnitt 11a ist ein Rohr 70 eingebracht und berührt mit seinem äußeren rechten Ende den Halteabschnitt 64 der Presshülse.

An der Unterseite des Pressabschnitts 62 der Presshülse sind mehrere kleine Erhebungen 65 angeordnet, die bei einem Verpressen in das Kunststoffrohr 70 eingreifen und eine zusätzliche Fixierung bewirken. Die Erhebungen 65 können hierbei entlang der Innenseite des Pressabschnitts 62 der Presshülse 60 verlaufen, jedoch auch eine andere Form aufweisen. Beispielsweise können mehrere spitzenförmige Erhebungen 65 auf der Innenseite des Pressabschnitts 62 angeordnet sein. Auf der äußeren Oberfläche des Pressabschnitts 62 ist zudem in der Nähe des Halteabschnitts ein Führungselement 63 vorgesehen. Dieses ist als dreiecksförmige umlaufende Erhebung ausgeführt und dient dazu, ein Presswerkzeug mit einer entsprechend angeordneten Kerbe zu führen und so eine geeignete Verpressung zu gewährleisten.

Der Mittelabschnitt 12 umfasst in dieser Ausgestaltungsform zwei gegenüberliegende Halterungen mit den Erhebungen 33a und 33b, zwischen denen das trennbare umlaufende Ringelement 20 angeordnet ist. Die Erhebungen 33a und 33b sind als in Richtung der Fläche 34 ansteigende Flächen ausgeführt, wobei einer der Halteabschnitte 33b eine größere Steigung aufweist als der andere, gegenüberliegende Halteabschnitt 33a.

Mit anderen Worten ist eine Seitenwand des Halteelements 33b größer als eine entsprechende Seitenwand des Halteelements 33a. Dadurch sind die Halterungen auf einer Seite des Fixierungselementes flacher als auf der anderen Seite. Das umlaufende Ringelement 20 greift mit seinem Halteabschnitt 25 in die durch die beiden Halteabschnitte 33a und 33b erzeugte Vertiefung im Bereich 34 ein und wird damit fixiert. Durch die unterschiedliche Ausprägung hinsichtlich der Steigung und der Höhe der beiden Halteabschnitte 33a und 33b kann der Ring besonders einfach von rechts kommend während der Herstellung des erfindungsgemäßen Fittings auf das Stützrohr geschoben und anschließend über die ansteigende Fläche des Halteelements 33a in die Vertiefung 34 eingerastet werden.

Die beiden Halteabschnitte 33a und 33b umlaufen die Stützhülse 1 in dieser Ausführung voll umfänglich. Alternativ kann auch vorgesehen sein, die Halteabschnitte 33a und 33b nur abschnittsweise auszubilden, beispielsweise in Form von symmetrisch angeordneten Teilabschnitten 33a und 33b. Der Außendurchmesser im Bereich 34 des Mittelabschnitts 12 ist in dieser Ausgestaltung leicht größer als der entsprechende Außendurchmesser in den Vertiefungen 13a, die zur Aufnahme des jeweiligen Halteelements 64 der Presshülse 60 ausgebildet sind. Die Breite dieses Bereichs 34 ist wiederum größer als die entsprechende Vertiefung 13a bzw. 15a 15b, sodass der Ring während des Aufschiebens über diese Vertiefungen geführt werden kann und anschließend in den Mittelabschnitt 12 im Bereich 34 einrastet.

In diesem Zusammenhang kann auch vorgesehen sein, den Außendurchmesser im Haltebereich 34 leicht größer auszuführen als den Außendurchmesser der restlichen Stützhülse, insbesondere in den Anschlussabschnitten 11a und 11b. Dies bedeutet, dass auch ein Innendurchmesser eines Ringelements 20 größer ist als der entsprechende Außendurchmesser in den Anschlussabschnitten 11a und 11b, wodurch besonders einfach ein Aufschieben des trennbaren Ringelements auf die Stützhülse ermöglicht wird.

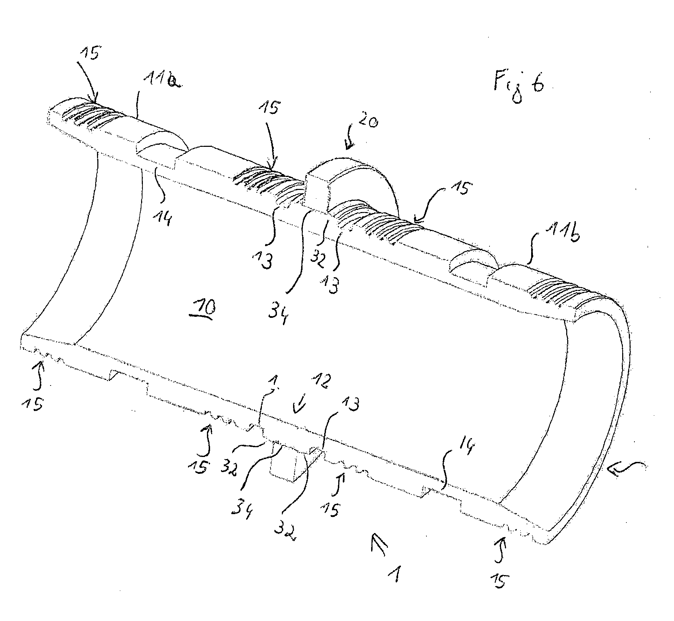

Eine weitere Darstellung ähnlich der Ausführung gemäß den Figuren 1 bis 3 zeigt die Figur 6. Bezüglich der Figuren 1 bis 3 gleiche Elemente tragen gleiche Bezugszeichen, wobei von eine erneute Erläuterung der Wirkung und Funktion dieser Abstand genommen wird.

Im Mittelabschnitt 12 ist ein Flanschring 20 angeordnet, der von zwei umlaufenden Fixierungen 32 in seiner Position im Abschnitt 34 gehalten wird. Der äußere Durchmesser im Bereich des Abschnitts 34 ist geringfügig größer als der äußere Durchmesser im Bereich der beiden Außenabschnitte 11a und 11b, beispielsweise zwischen den Vertiefungen 15. Dadurch kann der Ring 20 einfach auf die Stützhülse geschoben werden. Die beidseitig des Mittelabschnitts 12 umlaufenden Vertiefungen 13 nehmen die Halterungen von Klemm- bzw. Presshülsen auf.

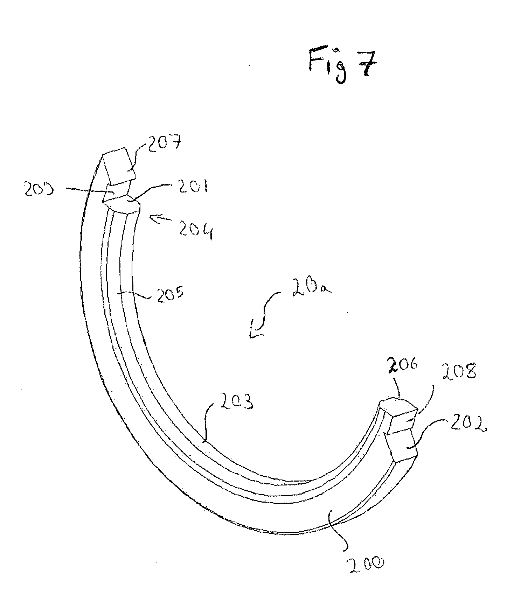

Figur 7 zeigt schließlich wiederum einen Halbring 200, der gemeinsam mit einem weiteren Gegenstück das trennbare Ringelelement 20a bildet. Der Halbring 200 mit seinem Körper ist auf seiner Innenseite 203 durch zwei schräg abgeflachte Kanten 205 und 206 leicht dünner, so dass er gut in eine Halterung einer hier nicht dargestellten Stützhülse passt. An einem Ende hat er eine Halterung mit einem Halteclip 207, der einen leicht überstehenden Vorsprung aufweist. Dieser passt in eine Halterung 202 am anderen Ende des Halbringes 200. Dieses besitzt eine zurückgesetzte Fläche 209, an die sich eine leichte Vertiefung und eine Schrägfläche anschließt. Die Vertiefung dient zur Aufnahme des Vorsprungs am Ende eines weiteren Halbringes, so dass die Fläche 208 einer Fläche 209 benachbart ist. Dadurch können mehrere Segmente, nicht nur die hier 2 dargestellten, zusammengeclippt bzw. gesteckt werden, um so einen Ring zu bilden.

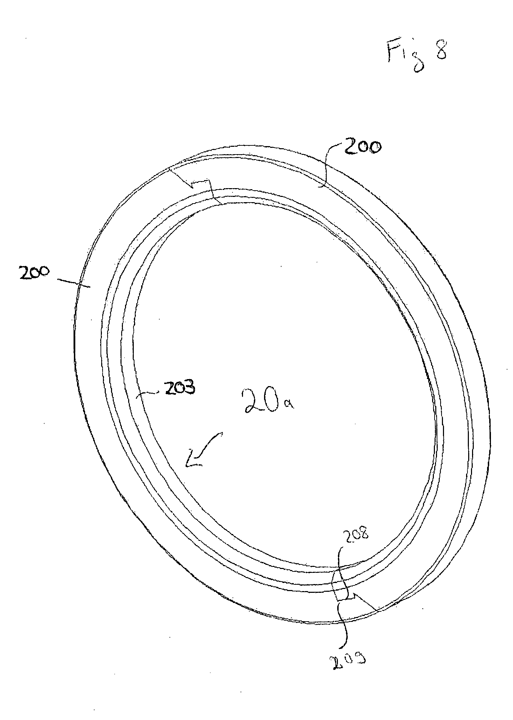

Eine Darstellung zweier so zusammengesetzter Halbringe 200, die gemeinsam das trennbare Ringelement 20a bilden zeigt Figur 8. Bei der Montage eines derartigen Ringelementes werden die beiden Halbringteile aufeinander geclippt. Die Nasen wirken als Rückhalterung und verhindern ein auseinanderfallen der beiden Halbringe 200. Gleichzeitig können an der Stützhülse im Mittelabschnitt Halterungen vorgesehen sein, die das Ringelement 20a in seiner Position fixiert.

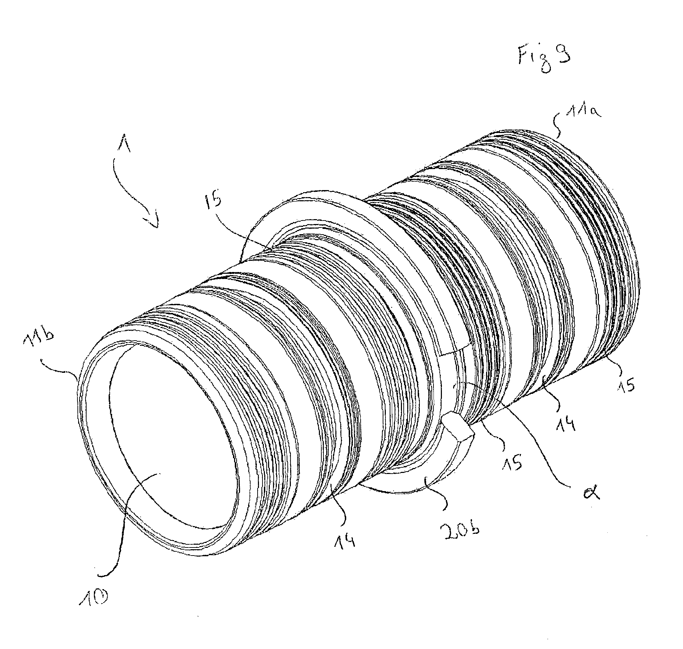

Einen weiteren Aspekt zeigt Figur 9. Dort ist das trennbare Ringelement als geschlitzter Ring 20b oder als Ringsegment 20b ausgeführt. Ein geschlitzter Ring ist ein Ringsegment, dessen Umfang vorzugsweise mehr als 180° aber nicht 360° beträgt, also keinen vollständig geschlossenen Ring bildet. Mit anderen Worten ist ein Öffnungswinkel des Ringsegmentes größer als 0° aber vorzugsweise kleiner oder gleich 180°. Das in Figur 9 dargestellte Ringsegment 20b hat einen Öffnungswinkel α von ungefähr 20°. Zur Installation wird es leicht aufgebogen und anschließend auf die Stützhülse entlang eines Endes bis in den Mittelabschnitt geschoben. In dieser Ausführung ist der Mittelabschnitt ohne weitere Halterungen zur Fixierung gebildet, wobei natürlich in anderen Ausgestaltungen derartige Halterungen oder auch Führungsschienen vorgesehen sein können.

Sofern der Umfang des Ringsegmentes kleiner ist, also beispielsweise weniger als 270° beträgt, kann das Ringsegment auch direkt im Mittelabschnitt der Stützhülse aufgesteckt werden.

In einer weiteren Ausführung ist an den Jeweiligen Enden des Ringsegmentes, also im Bereich des Schlitzes jeweils ein Halteclip vorgesehen. Weiterhin ist eine Sollknickstelle im Ringsegment angebracht, so dass das Ringsegment durch die Knickstelle über die Stützhülse geschoben wird, anschließend zusammengedrückt und schließlich mittels der Halteclips an seiner Öffnung zusammengesteckt wird, so dass ein umlaufender Ring gebildet ist.

Mit der Erfindung wird ein Fitting insbesondere zum Verbinden zweier Rohre geschaffen, bei dem ein Materialverbrauch während der Herstellung insbesondere der Stützhülse reduziert wird. Dies wird erreicht durch eine konsequente Trennung und separate Ausbildung der Stützhülse und eines hiervon trennbaren Ringelements, welches einen symmetrischen Mittelabschnitt bildet. Beide können aus unterschiedlichem Material, beispielsweise Metall und Kunststoff gefertigt sein. Beispielsweise kann das Ringelement aus Kunststoff gebildet sein, während die Stützhülse aus Metall, beispielsweise aus Kupfer, besteht. Das Ringelement wird auf die Stützhülse aufgeschoben und mittels eines Fixierungselements der Stützhülse im Mittelabschnitt in einer Fixposition gehalten. Die hier dargestellten Ausführungen können beliebig kombiniert werden, ohne dass dies die wesentlichen Gedanken der Erfindung beeinträchtigt. Beispielsweise können steckbare Halbringe oder Ringsegmente auch bei Stützhülsen mit Halterungen im Mittelabschnitt bzw. durchgehende Ringe bei Stützhülsen ohne Halterungen im Mittelabschnitt verwendet werden. Zur vereinfachten Darstellung wurden einfache Fittings mit Anschlussenden für zwei Rohre verwendet. Natürlich lässt sich dieses Prinzip eines Fittings mit einem trennbaren Ringelement auch auf Fittings mit nur einem Anschlussstück für ein Rohr und einer Schraubverbindung am anderen Ende, für ein T-Stück, einen Verteiler oder jede andere Form von Rohre verbindenden Elementen verwenden. Der Mittelabschnitt und das trennbare Ringelement müssen nicht symmetrisch bezüglich des Fittings sein. Auch eine asymmetrische Anordnung ist möglich.

### Bezugszeichenliste

- 1: Stützhülse
- 10: Öffnung
- 11a, 11b: Anschlussabschnitte
- 12: Mittelabschnitt
- 13, 13a: Vertiefungen für Halteabschnitte einer Press- bzw. Klemmhülse
- 15: Vertiefungen für Gummidichtungen
- 15a, 15b: Vertiefungen für Gummidichtungen
- 20: trennbares Ringelement
- 20a: Halbring
- 20b: Ringsegment, geschlitzter Ring
- 21: Ringelementabschnitt
- 25: Halteabschnitt des Ringelements
- 32: Halteelement
- 33a, 33b: Halteelemente
- 34: Halteabschnitt
- 45: Gummidichtungen
- 60: Presshülse
- 61: Presshülsenabschnitt
- 62: Pressabschnitt
- 64: Halteabschnitt der Presshülse
- 200: Halbringkörper
- 203: Innenseite
- 205: abgeschrägte Kante
- 204: Endbereich
- 206, 207: Halteclip
- 208, 209: Flächen
- α: Öffnungswinkel

## Patentansprüche

1. Fitting insbesondere zum Verbinden zweier Rohre, umfassend:
- eine Stützhülse (1)
- mit einem ersten Anschlussabschnitt (11a) an einem ersten Ende und
- mit einem zweiten Anschlussabschnitt an einem gegenüberliegendem zweiten Ende, wobei zumindest der erste Anschlussabschnitt (11a) so geformt ist, dass ein Rohrabschnitt (70) aufsteckbar ist;
- mit einem Mittelabschnitt (12) zwischen dem ersten und dem zweiten Anschlussabschnitt (11a, 11b) angeordnet, wobei der Mittelabschnitt (12) ein zumindest teilweise um die Stützhülse laufendes Fixierungselement (32, 34) aufweist;
- ein trennbares Ringelement (20) mit einem Innendurchmesser, der im Wesentlichen einem Außendurchmesser des Mittelabschnittes (12) entspricht und das ausgebildet ist, auf die Stützhülse (1) aufgebracht und durch das Fixierungselement (32, 34) im Mittelabschnitt (12) in einer Fixposition gehalten zu werden, wobei das Fixierungselement mehrere zum Teil gegenüberliegende oder zueinander versetzte und zumindest abschnittsweise im Mittelabschnitt (12) um die Stützhülse (1) herumlaufende Halterungen (32, 32a, 32b) umfasst, zwischen denen das Ringelement (20) einfügbar, insbesondere klemmbar ist, **dadurch gekennzeichnet, dass** wenigstens eine der Halterungen (32, 32a, 32b) als erste Erhebung ausgeführt ist, deren äußere Oberfläche abflachend und in Richtung zur Mitte der Stützhülse (1) ansteigend ausgebildet ist, so dass die Erhebung eine Art Dreieck mit einer steil abfallenden Seitenflanke bildet.

2. Fitting nach Anspruch 1, bei dem wenigstens eine weitere Halterung (32b) als wenigstens eine der ersten Erhebung gegenüberliegende zweite Erhebung mit einer ansteigenden Fläche ausgebildet ist, wobei vorzugsweise die ansteigende Fläche der ersten Erhebung auf einer Seite des Fixierungselementes flacher oder gleich ist als die ansteigende Fläche der zweiten Erhebung auf der anderen Seite des Fixierungselementes.

3. Fitting nach einem der Ansprüche 1 bis 2, bei dem eine Auflagefläche (34) des Fixierungselements für das trennbare Ringelement einen Außendurchmesser aufweist, der gleich oder geringfügig größer ist als ein Außendurchmesser der Stützhülse im Bereich der Anschlussabschnitte (11a, 11b).

4. Fitting nach einem der Ansprüche 1 bis 3, bei dem beidseitig des Fixierungselementes (32, 34) in der Stützhülse (1) Vertiefungen (13, 13a, 13c) zur Aufnahme von Press- oder Klemmhülsen (60) vorgesehen sind, wobei vorzugsweise eine Breite der Vertiefung (13c) für ein Halteelement (64) der Press-oder Klemmhülse (60) kleiner ist als eine Aussparung des Fixierungselementes.

5. Fitting nach Anspruch 4, bei dem die Vertiefungen (13, 13a, 13c) zur Aufnahme von Press- oder Klemmhülsen (60) bezüglich den Halterungen des Fixierungselementes zumindest teilweise versetzt angeordnet sind.

6. Fitting nach einem der Ansprüche 4 bis 5, bei dem ein Abstand zwischen Vertiefungen (13, 13a, 13c) zur Aufnahme von Press- oder Klemmhülsen (60) und dem Fixierungselement derart gewählt ist, dass eine aufgesteckte Press- oder Klemmhülse (60) vom Ringelement beabstandet ist.

7. Fitting nach einem der Ansprüche 1 bis 6, bei dem das trennbare Ringelement (20a) wenigstens die folgenden Elemente umfasst:
- zusammensteckbare Ringsegmente (200),
bei dem das Ringsegment (200) vorzugsweise an einem Ende einen Halteclip (207) mit einem Vorsprung umfasst, der ein einen Halteclip (206) mit einer Vertiefung eines weiteren Ringsegmentes eingreift;
- einen geschlitzten Ring, dessen Öffnungswinkel (α) größer als 0° und kleiner als 180° ist; oder
- einen geschlitzten Ring, der im wesentlichen dem Schlitz gegenüberliegend eine Sollknickstelle aufweist, und ein an dessen Schlitz angeordnetes Clipelement zum Zusammenstecken.

8. Fitting nach einem der Ansprüche 1 bis 7, bei dem dass Ringelement (20) ein gegenüber der Stützhülse (1) unterschiedliches Material und oder eine unterschiedliche Farbe aufweist und/oder auf der äußeren Oberfläche des Ringelementes (20) schriftliche Informationen aufgebracht sind.

9. Fitting nach einem der Ansprüche 1 bis 8, bei dem die Stützhülse (1) und/oder das Ringelement (12) aus einem Metall einer Metalllegierung oder einem Kunststoff oder einem Metall-Kunststoff-Verbundwerkstoff besteht.

10. Fitting nach einem der Ansprüche 1 bis 9, bei dem das Ringelement (20) im Abschnitt benachbart zu seinem Innendurchmesser ein weicheres Material als die Stützhülse aufweist.

11. Fitting nach einem der Ansprüche 1 bis 10, bei dem das trennbare Ringelement (20) einen Haltebereich (25) zur Befestigung am Fixierungselement umfasst, sowie einen daran angrenzenden Bereich (25a, 21), der eine gegenüber dem Haltebereich (25) unterschiedliche Dicke aufweist.

12. Fitting nach einem der Ansprüche 1 bis 11, bei dem das trennbare Ringelement die Form eines "I" aufweist mit einem Haltebereich (25) zur Befestigung am Fixierungselement, einem mittleren Bereich und einem gegenüber dem mittleren Bereich (21) verbreiterten Außenbereich.

13. Fitting nach einem der Ansprüche 1 bis 12, bei dem das Ringelement einen Außendurchmesser aufweist, der größer ist als ein Durchmesser einer auf das Fitting geschobenen Klemm- oder Presshülse.

14. Fitting nach einem der Ansprüche 1 bis 13, bei dem der zweite Anschlussabschnitt (11b) ein Gewinde, vorzugsweise eine Aussengewinde zum Aufschrauben eines weiteren Elementes aufweist.

15. Fitting nach einem der Ansprüche 1 bis 14, bei dem der zweite Anschlussabschnitt (11b) bezüglich des ersten Anschlussabschnitts (11a) einen anderen Aussen- und/oder Innendurchmesser aufweist.

## Claims

1. Fitting, in particular for connecting two pipes, comprising:
- a support sleeve (1)
- having a first connection portion (11a) at a first end and
- having a second connection portion at an opposing, second end, wherein at least the first connection portion (11a) is shaped such that a pipe portion (70) can be pushed on;
- having a middle portion (12) arranged between the first and the second connection portions (11a, 11b), wherein the middle portion (12) has a fixing element (32, 34) running at least partially around the support sleeve;
- a separable ring element (20), which has an internal diameter corresponding substantially to an external diameter of the middle portion (12) and which is formed to be applied to the support sleeve (1) and to be retained in a fixed position by the fixing element (32, 34) in the middle portion (12), wherein the fixing element comprises a plurality of mounting elements (32, 32a, 32b), which lie opposite one another in part or are offset in relation to one another and run around the support sleeve (1) at least in certain portions in the middle portion (12), and between which the ring element (20) can be inserted, in particular can be clamped, **characterized in that** at least one of the mounting elements (32, 32a, 32b) is embodied as a first elevation, the outer surface of which has a levelling form with a rising form in the direction toward the middle of the support sleeve (1), such that the elevation forms a type of triangle with a steeply falling side flank.

2. Fitting according to Claim 1, wherein at least one further mounting element (32b) is formed as at least one second elevation which lies opposite the first elevation and has a rising face, the rising face of the first elevation on one side of the fixing element preferably being flatter than or equal to the rising face of the second elevation on the other side of the fixing element.

3. Fitting according to either of Claims 1 and 2, wherein a contact surface (34) of the fixing element for the separable ring element has an external diameter which is equal to or slightly greater than an external diameter of the support sleeve in the region of the connection portions (11a, 11b).

4. Fitting according to one of Claims 1 to 3, wherein recesses (13, 13a, 13c) for receiving pressing or clamping sleeves (60) are provided on both sides of the fixing element (32, 34) in the support sleeve (1), a width of the recess (13c) for a retaining element (64) of the pressing or clamping sleeve (60) preferably being smaller than a cutout in the fixing element.

5. Fitting according to Claim 4, wherein the recesses (13, 13a, 13c) for receiving pressing or clamping sleeves (60) are arranged at least partially offset relative to the mounting elements of the fixing element.

6. Fitting according to either of Claims 4 and 5, wherein a distance between recesses (13, 13a, 13c) for receiving pressing or clamping sleeves (60) and the fixing element is selected in such a manner that a pressing or clamping sleeve (60) which has been pushed on is spaced apart from the ring element.

7. Fitting according to one of Claims 1 to 6, wherein the separable ring element (20a) comprises at least the following elements:
- ring segments (200) which can be placed together,
wherein the ring segment (200) at one end preferably comprises a retaining clip (207) having a protrusion which engages into a retaining clip (206) having a recess of a further ring segment;
- a slotted ring, the opening angle (α) of which is greater than 0° and smaller than 180°; or
- a slotted ring, which, lying substantially opposite the slot, has a predetermined bending point, and a clip element arranged at the slot thereof for placing together.

8. Fitting according to one of Claims 1 to 7, wherein the ring element (20) comprises a different material to the support sleeve (1) and/or has a different colour and/or written information is applied to the outer surface of the ring element (20).

9. Fitting according to one of Claims 1 to 8, wherein the support sleeve (1) and/or the ring element (12) consists of a metal or a metal alloy or a plastic or a metal-plastic composite material.

10. Fitting according to one of Claims 1 to 9, wherein the ring element (20) comprises a softer material than the support sleeve in the portion adjacent to the internal diameter thereof.

11. Fitting according to one of Claims 1 to 10, wherein the separable ring element (20) comprises a retaining region (25) for fastening to the fixing element, and also a region (25a, 21) which is adjacent thereto and has a different thickness to the retaining region (25).

12. Fitting according to one of Claims 1 to 11, wherein the separable ring element has the form of an "I", with a retaining region (25) for fastening to the fixing element, a middle region and an outer region which is widened relative to the middle region (21).

13. Fitting according to one of Claims 1 to 12, wherein the ring element has an external diameter which is greater than a diameter of a clamping or pressing sleeve which has been slid onto the fitting.

14. Fitting according to one of Claims 1 to 13, wherein the second connection portion (11b) has a thread, preferably an external thread, for screwing on a further element.

15. Fitting according to one of Claims 1 to 14, wherein the second connection portion (11b) has a different external and/or internal diameter to the first connection portion (11a).

## Revendications

1. Raccord, en particulier pour raccorder deux tubes, comprenant :
- une gaine de support (1)
- avec une première portion de raccordement (11a) à une première extrémité et
- avec une deuxième portion de raccordement à une deuxième extrémité opposée, au moins la première portion de raccordement (11a) étant formée de telle sorte qu'une portion de tube (70) puisse être enfichée ;
- avec une portion centrale (12) disposée entre la première et la deuxième portion de raccordement (11a, 11b), la portion centrale (12) présentant un élément de fixation (32, 34) s'étendant au moins en partie autour de la gaine de support ;
- un élément annulaire séparable (20) ayant un diamètre intérieur qui correspond essentiellement à un diamètre extérieur de la portion centrale (12) et qui est réalisé de manière à être appliqué sur la gaine de support (1) et à être maintenu dans une position fixe par l'élément de fixation (32, 34) dans la portion centrale (12), l'élément de fixation comprenant plusieurs fixations (32, 32a, 32b) en partie opposées ou décalées les unes par rapport aux autres et s'étendant au moins en partie dans la portion centrale (12) autour de la gaine de support (1), entre lesquelles peut être introduit l'élément annulaire (20), en particulier par serrage, **caractérisé en ce qu'**au moins l'une des fixations (32, 32a, 32b) est réalisée sous forme de premier rehaussement dont la surface extérieure est réalisée de manière à s'aplatir et à augmenter dans la direction du centre de la gaine de support (1), de sorte que le rehaussement forme une espèce de triangle avec un flanc latéral descendant fortement.

2. Raccord selon la revendication 1, dans lequel au moins une fixation supplémentaire (32b) est réalisée sous forme d'au moins un deuxième rehaussement opposé au premier rehaussement, avec une surface montante, la surface montante du premier rehaussement d'un côté de l'élément de fixation étant de préférence plus plate ou étant identique à la surface montante du deuxième rehaussement de l'autre côté de l'élément de fixation.

3. Raccord selon l'une quelconque des revendications 1 à 2, dans lequel une surface d'appui (34) de l'élément de fixation pour l'élément annulaire séparable présente un diamètre extérieur qui est identique ou légèrement supérieur à un diamètre extérieur de la gaine de support dans la région des portions de raccordement (11a, 11b).

4. Raccord selon l'une quelconque des revendications 1 à 3, dans lequel, des deux côtés de l'élément de fixation (32, 34) dans la gaine de support (1) sont prévus des renfoncements (13, 13a, 13c) pour recevoir des douilles de pressage ou de serrage (60), une largeur du renfoncement (13c) pour un élément de retenue (64) de la douille de pressage ou de serrage (60) étant de préférence plus petite qu'un évidement de l'élément de fixation.

5. Raccord selon la revendication 4, dans lequel les renfoncements (13, 13a, 13c) pour recevoir des douilles de pressage ou de serrage (60) sont disposés de manière au moins partiellement décalée par rapport aux fixations de l'élément de fixation.

6. Raccord selon l'une quelconque des revendications 4 à 5, dans lequel une distance entre des renfoncements (13, 13a, 13c) pour recevoir des douilles de pressage ou de serrage (60) et l'élément de fixation est choisie de telle sorte qu'une douille de pressage ou de serrage (60) enfichée soit espacée de l'élément annulaire.

7. Raccord selon l'une quelconque des revendications 1 à 6, dans lequel l'élément annulaire séparable (20a) comprend au moins les éléments suivantes :
- des segments annulaires enfichables les uns dans les autres (200),
le segment annulaire (200) comprenant de préférence à une extrémité une pince de retenue (207) avec une saillie qui vient en prise dans une pince de retenue (206) avec un renfoncement d'un autre segment annulaire ;
- une bague fendue dont l'angle d'ouverture (α) est supérieur à 0° et inférieur à 180° ; ou
- une bague fendue qui présente essentiellement un point destiné à l'inflexion en regard de la fente, et un élément de pince disposé au niveau de sa fente, pour l'enfichage mutuel.

8. Raccord selon l'une quelconque des revendications 1 à 7, dans lequel l'élément annulaire (20) présente un matériau différent par rapport à la gaine de support (1) et/ou une couleur différente, et/ou des informations écrites sont appliquées sur la surface extérieure de l'élément annulaire (20).

9. Raccord selon l'une quelconque des revendications 1 à 8, dans lequel la gaine de support (1) et/ou l'élément annulaire (12) se compose d'un métal, d'un alliage de métal ou d'un plastique ou d'un matériau composite métal-plastique.

10. Raccord selon l'une quelconque des revendications 1 à 9, dans lequel l'élément annulaire (20) présente, en partie, à proximité de son diamètre intérieur, un matériau plus souple que celui de la gaine de support.

11. Raccord selon l'une quelconque des revendications 1 à 10, dans lequel l'élément annulaire séparable (20) comprend une région de retenue (25) pour la fixation à l'élément de fixation, ainsi qu'une région adjacente à celle-ci (25a, 21), qui présente une épaisseur différente de celle de la région de retenue (25).

12. Raccord selon l'une quelconque des revendications 1 à 11, dans lequel l'élément annulaire séparable a la forme d'un "I" avec une région de retenue (25) pour la fixation à l'élément de fixation, une région centrale et une région extérieure élargie par rapport à la région centrale (21).

13. Raccord selon l'une quelconque des revendications 1 à 12, dans lequel l'élément annulaire présente un diamètre extérieur qui est supérieur à un diamètre d'une douille de serrage ou de pressage poussée sur le raccord.

14. Raccord selon l'une quelconque des revendications 1 à 13, dans lequel la deuxième portion de raccordement (11b) présente un filetage, de préférence un filetage extérieur, pour le vissage d'un autre élément.

15. Raccord selon l'une quelconque des revendications 1 à 14, dans lequel la deuxième portion de raccordement (11b) présente un autre diamètre extérieur et/ou intérieur par rapport à la première portion de raccordement (11a).
